(19) Europäisches Patentamt
European Patent Office
Office européen des brevets

(11) Numéro de publication: **0 209 471**
**B1**

(12) # FASCICULE DE BREVET EUROPEEN

(45) Date de publication du fascicule du brevet: **25.01.89**

(51) Int. Cl.⁴: **C22B 34/34**, C22B 60/02, C22B 3/00, C01G 39/00

(21) Numéro de dépôt: **86420156.1**

(22) Date de dépôt: **16.06.86**

(54) **Procédé de séparation, par précipitation, du molybdène contenu dans des solutions de nitrate d'uranyle.**

(30) Priorité: **17.06.85 FR 8509522**
**30.05.86 FR 8608076**

(43) Date de publication de la demande:
**21.01.87 Bulletin 87/4**

(45) Mention de la délivrance du brevet:
**25.01.89 Bulletin 89/4**

(84) Etats contractants désignés:
**DE FR GB**

(56) Documents cités:
**FR-A- 2 128 426**
**US-A- 3 223 476**
**US-A- 3 349 108**
**US-A- 3 821 351**

**CHEMICAL ABSTRACTS, vol. 83, 1975, page 706, no. 157388u, Columbus, Ohio, US; V.K. GUPTA et al.: "Hydroxamic acids. XIV. Reactions of N-arylhydroxamic acids with metal ions", & J. INDIAN CHEM. SOC. 1975, 52(3), 267-8**
**CHEMICAL ABSTRACTS, vol. 100, 1984, page 702, revendication no. 150025j, Columbus, Ohio, US; E. UHLEMANN et al.: "Complex formation and extraction of molybdenum (VI) with bidentate ligands", & Z. ANORG. ALLG. CHEM. 1984, 508, 191-6**
**CHEMICAL ABSTRACTS,**

(73) Titulaire: **URANIUM PECHINEY, Tour Manhattan, La Défense 2, 6, place de l'Iris,, F-92400 Courbevoie(FR)**

(72) Inventeur: **Bernasconi, Pascal, 38 bd. d'Haussonville, F-54000 Nancy(FR)**
Inventeur: **Bessiere, Jacques, 6 Résidence La Haye-Veleine en Haye, F-54840 Gondreville(FR)**
Inventeur: **Blazy, Pierre, 18 Place de la Carrière, F-54000 Nancy(FR)**
Inventeur: **Martinez, Bernard, 6 rue Pierre Sire, F-11000 Narbonne(FR)**

(74) Mandataire: **Vanlaer, Marcel et al, PECHINEY 28, rue de Bonnel, F-69433 Lyon Cédex 3(FR)**

(56) Documents cités: (suite)
**vol. 88, 1978, page 606, revendication no. 83056p, Columbus, Ohio, US; V.A. KULUMBEGASHVILI et al.: "Precipitation and separation of molybdenum using N-cinnamoylphenylhydroxylamine", & KHIM. ANALIZ, MOR. OSADKOV 1977, 140-9**
**CHEMICAL ABSTRACTS, vol. 89, 1978, page 702, revendication no. 139857r, Columbus, Ohio, US; N.S. BOROVAYA et al.: "Amperometric determination of molybdenum by N-benzoylphenylhydroxylamine", & VESTN. LENINGR. UNIV., FIZ., KHIM. 1978, (2), 138-40**
**CHEMICAL ABSTRACTS, vol. 74, 1971, page 283, revendication no. 80390t, Columbus, Ohio, US; H. FOERSTER: "Extractability, reextractability, and separability of some metal ions as benzoylphenylhydroxylamine complexes", & J. RADIOANAL. CHEM. 1970, 6(1), 11-26, 422-9 000**

**EP 0 209 471 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un procédé de séparation, par précipitation sélective, du molybdène contenu dans des solutions acides uranifères.

L'homme de l'art sait que dans l'hydrométallurgie de l'uranium, les concentrés résultant de l'attaque des minerais sont traités par l'acide nitrique. Après séparation des insolubles, la solution obtenue est mise en contact avec des solvants organiques de manière à en extraire le nitrate d'uranyle. Ce sel est réextrait du solvant au moyen d'une phase aqueuse, puis on lui fait subir différents traitements qui conduisent à l'obtention d'$UF_6$ ou du métal lui-même.

Selon l'origine des minerais, les concentrés d'uranium peuvent contenir des quantités plus ou moins grandes de molybdène.

Or, lors de la dissolution acide, ce métal est dissous en même temps que l'uranium et le suit partiellement lors des traitements de purification par solvants organiques.

Il en résulte un nitrate d'uranyle pollué par le molybdène.

Sachant que les exigences de l'industrie nucléaire sont de l'ordre de 1 ppm de molybdène dans l'uranium, l'homme de l'art se trouve confronté à un problème de séparation de cet élément de la solution uranifère, en particulier du nitrate d'uranyle.

Certes, de nombreuses solutions ont déjà été proposées. On peut citer, par exemple, celle qui est enseignée par l'USP 3 156 524 et qui consiste à traiter un solvant aminé contenant le nitrate d'uranyle et le molybdène par un oxydant avant réextraction. Mais ce procédé s'applique aux solutions de minerai et a surtout pour but d'éviter la formation de crasses et s'il abaisse, en fait, la teneur en molybdène, il ne permet cependant pas d'atteindre la pureté requise.

C'est pourquoi, la demanderesse consciente de l'insuffisance des solutions proposées, a cherché et trouvé un procédé permettant de séparer par précipitation, le molybdène contenu dans des solutions acides uranifères en particulier de nitrate d'uranyle. Ce procédé peut être effectué avant ou après les opérations habituelles de purification par extraction liquide-liquide des concentrés uranifères.

Ce procédé est caractérisé en ce que l'on utilise comme agent de précipitation un produit appartenant à la famille des acides hydroxamiques solubles dans un solvant miscible à la solution.

Pour que l'agent de précipitation convienne, il faut qu'il puisse conduire à une précipitation complète du molybdène sans entraîner d'uranium dans le précipité formé.

Or, la demanderesse a trouvé que certains produits de la famille des acides hydroxamiques, solubles dans un solvant miscible à la phase aqueuse à traiter, étaient des réactifs de précipitation très sélectifs du molybdène n'ayant pas d'interférence avec l'uranium et qu'ils répondaient donc parfaitement au but recherché.

Ces produits sont les suivants:

– la N-benzoylphenylhydroxylamine dénommée communément (NBPH), de formule:

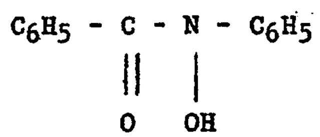

– l'acide décanehydroxamique, de formule:

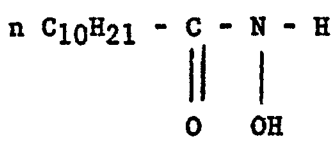

– l'acide dodéranehydroxamique, de formule:

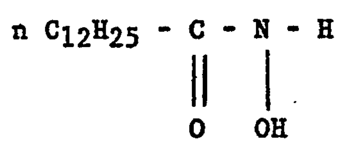

En effet, ces produits sont des agents chélatants des ions $MoO_2^{2+}$ présents dans le milieu à traiter et conduisent à des produits insolubles.

Par exemple, dans le cas de la N-benzoylphenylhydroxylamine, la réaction est la suivante:

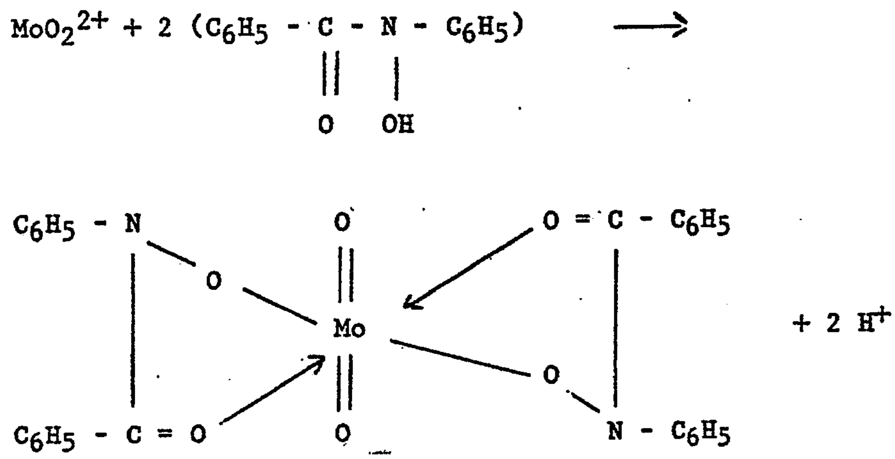

Il suffit donc d'ajouter à la solution acide uranifère contenant le molybdène un ou plusieurs des agents de précipitation selon l'invention, en solution dans un solvant miscible à la solution acide uranifère, pour provoquer la formation d'un précipité qui peut ensuite être récupéré par tout moyen connu tel que par exemple décantation, centrifugation, filtration ou une combinaison de ces moyens.

Mais la demanderesse a également trouvé que lorsque les groupements carbonés des acides hydroxamiques selon l'invention présentaient une certaine hydrophobicité comme, par exemple, dans le cas de la N-benzoylphenylhydroxylamine, le précipité formé entre cette molécule et le molybdène pouvait être récupéré par flottation. Cette technique consiste à faire passer dans le milieu réactionnel un courant ascendant de bulles d'un gaz inerte vis à vis du milieu réactionnel en général (air ou azote). En raison du caractère hydrophobe du précipité, celui-ci s'adsorbe sur les bulles de gaz et remonte et à la surface où il peut être recueilli à partir des mousses formées sans génération d'effluent.

La solution acide de départ contient l'un au moins des acides du groupe constitué par l'acide nitrique, l'acide sulfurique, l'acide chlorhydrique, leurs mélanges, mais préférentiellement l'acide nitrique.

Le procédé selon l'invention conduit à des résultats particulièrement intéressants quand la solution acide uranifère contient entre 0,05 et 2 valences gramme d'acide par litre.

Dans un tel milieu et à une température n'excédant pas 60°C, mais préférentiellement 40°C, la précipitation par l'acide hydroxamique est pratiquement complète en moins de 15 minutes et sans interférence de l'uranium pour des solutions contenant jusqu'à 500 g/l, mais préférentiellement 200 g/l, d'uranium et pour des teneurs de l'ordre de 100 mg/l de molybdène, mais de préférence de l'ordre de 50 mg/l et plus particulièrement 1 mg/l.

La quantité $\Phi$ d'agent de précipitation, appelé aussi collecteur, mise en œuvre est de l'ordre de 2 à 5000 moles par mole de molybdène contenu dans la solution acide de départ et permet d'atteindre des teneurs résiduelles très faibles en molybdène et inférieures à 0,1 mg/l ce qui correspond à la pureté exigée par l'industrie nucléaire (rapport Mo/U inférieur à 1 ppm); elle dépend de la teneur initiale en Molybdène et $\Phi$ est d'autant plus élevé que cette concentration initiale en molybdène est faible.

L'invention peut être illustrée à l'aide de la figure 1 ci-jointe qui représente en traits continus les différentes étapes du cycle de l'uranium du concentré jusqu'à l'obtention de l'$UF_6$ ou du métal lui-même et sur laquelle ont été indiqués en traits discontinus une solution possible d'élimination du molybdène selon l'invention.

On y voit un réacteur A d'attaque des concentrés S1, par l'acide nitrique L1 pour donner une suspension L2 qui est séparée en B par un stérile S2 et une liqueur L3 contenant le nitrate d'uranyle et des impuretés solubles telles que le molybdène. Cette liqueur L3 est purifiée en C au moyen de solvants organiques qui extraient l'uranium pour donner la liqueur L4 de laquelle on réextrait en D l'uranium dans une phase aqueuse L5 qui fait l'objet de traitements particuliers en vue d'obtenir en E le produit final S5 qui peut être de l'$UF_6$ ou le métal lui-même.

Dans la présente invention, pour obtenir un nitrate d'uranyle plus pauvre en molybdène, on envoie la phase aqueuse L5 vers un réacteur F dans lequel on introduit l'acide hydroxamique S3 et où on précipite le molybdène. La suspension L6 obtenue passe alors en G où elle est séparée en un solide S4 contenant le molybdène et une liqueur L7 purifiée qui rejoint le circuit normal de traitement en E.

L'invention peut être illustrée à l'aide des exemples d'application suivants:

<u>Exemple 1</u>

Une solution de nitrate d'uranyle industrielle ayant une acidité de 0,1 N contenant 135 g/l d'uranium et 0,28 mg/l Mo soit $2{,}910^{-6}$ mole/litre a été traitée avec de la N-benzoylphenylhydroxylamine préalablement

dissoute soit dans l'éthanol, soit dans la soude 1 N. Dans ce dernier cas, l'acidité est ramenée à 0,1 N par ajout d'acide nitrique.

On a formé un produit bien floculé et après une durée de précipitation de 15 minutes, on a obtenu en fonction de la quantité de N-benzoylphenylhydroxylamine utilisée et définie par Φ, rapport de quantité en moles à la quantité de molybdène en moles présente dans le nitrate, les teneurs résiduelles suivantes en Mo dans le nitrate ainsi que les taux de récupération en molybdène % suivants:

| | Φ | Concentration en N-benzoylphenyl-hydroxylamine mole/l | Mo résiduel en mg/l | Récupération Mo en % |
|---|---|---|---|---|
| Solvant: Ethanol | 750 | $2,23 \times 10^{-3}$ | 0,07 | 74,3 |
| | 4000 | $1,00 \times 10^{-2}$ | 0,28 | 0 |
| Solvant: NaOH 1N | 1580 | $4,34 \times 10^{-3}$ | 0,21 | 20,7 |
| | 2400 | $6,40 \times 10^{-3}$ | 0,17 | 34,1 |
| | 4000 | $1,00 \times 10^{-2}$ | 0,08 | 67,3 |

On constate, qu'avec l'éthanol, on obtient une solution de nitrate de pureté nucléaire mais que le taux de séparation diminue quand Φ augmente. Au contraire, avec la soude, pour avoir une pureté nucléaire, il faut une valeur de Φ plus élevée.

Malgré ces valeurs pour une solution de nitrate d'uranyle à 135 g/l d'uranium, pour Φ = 4000 (Mo résiduel 0,08 mg/l) la consommation en N-Benzyolphenylhydroxylamine n'est que de 18 g environ par kg d'uranium.

Exemple 2

On part d'une solution acide uranifère contenant:
150 g d'uranium (VI) sous forme de nitrate d'uranyle
10 mg/l de molybdène
0,1 N d'acide nitrique

Les agents de précipitation sont dissous dans l'éthanol et différentes quantités Φ (rapport du nombre de moles d'agent de précipitation au nombre de mole Mo présent) ont été utilisées.
Les précipités de molybdène obtenus sont récupérés par flottation après insufflation d'air.

Le tableau suivant donne les teneurs résiduelles en Mo obtenues en fonction de la quantité Φ d'agent de précipitation utilisée.

| Nature du collecteur | Φ | Mo résiduel mg/l |
|---|---|---|
| Acide décanehydroxamique | 2 | 1,03 |
| | 3 | 0,08 |
| | 5 | ≤ 0,01 |
| | 10 | ≤ 0,01 |
| Acide dodécanehydroxamique | 2 | 0,59 |
| | 3 | ≤ 0,01 |
| | 5 | ≤ 0,01 |
| | 10 | ≤ 0.01 |

Cette invention trouve son application en particulier dans l'obtention de nitrate d'uranyle de pureté nucléaire.

## Revendications

1. Procédé de séparation par précipitation du molybdène contenu dans des solutions acides uranifères à l'aide d'un agent appartenant à la famille des acides hydroxamiques solubles dans un solvant miscible à la solution acide, caractérisé en ce que ledit agent est choisi dans le groupe constitué par la N-benzoylphenylhydroxilamine, l'acide décanehydroxamique et l'acide dodécanehydroxamique.

2. Procédé selon la revendication 1, caractérisé en ce que le précipité est récupéré par flottation.

3. Procédé selon la revendication 1, caractérisé en ce que le précipité est récupéré par une opération appartenant au groupe constitué par la décantation, la centrifugation, la filtration et leurs combinaisons.

4. Procédé selon la revendication 1, caractérisé en ce que les solutions acides contiennent l'un au

moins des acides du groupe constitué par l'acide nitrique, l'acide sulfurique, l'acide chlorhydrique et leurs mélanges.

5. Procédé selon la revendication 1, caractérisé en ce que la solution acide uranifère contient de 0,05 à 2 valence gramme d'acide par litre.

6. Procédé selon la revendication 1, caractérisé en ce que l'agent de précipitation est utilisé dans des quantités comprises entre 2 et 5000 moles par mole de molybdène contenu dans la solution acide.

**Patentansprüche**

1. Verfahren zur Abtrennung durch Fällung des in uranhaltigen sauren Lösungen enthaltenen Molybdäns mit Hilfe eines Mittels, das zur Gruppe der in einem mit der sauren Lösung mischbaren Lösungsmittel löslichen Hydroxamsäuren gehört, dadurch gekennzeichnet, daß das Mittel aus der Gruppe gewählt wird, die durch das N-Benzoylphenylhydroxylamin, die Decanhydroxamsäure und die Dodecanhydroxamsäure gebildet ist.

2. Verfahren nach dem Anspruch 1, dadurch gekennzeichnet, daß die Ausfällung durch Flotation erfaßt wird.

3. Verfahren nach dem Anspruch 1, dadurch gekennzeichnet, daß die Ausfällung durch einen Vorgang erfaßt wird, der zu der aus der Dekantierung, der Zentrifugierung, der Filtration und deren Kombinationen gebildeten Gruppe gehört.

4. Verfahren nach dem Anspruch 1, dadurch gekennzeichnet, daß die sauren Lösungen wenigstens eine der Säuren der Gruppe enthalten, die durch die Salpetersäure, die Schwefelsäure, die Salzsäure und deren Mischungen gebildet ist.

5. Verfahren nach dem Anspruch 1, dadurch gekennzeichnet, daß die uranhaltige saure Lösung 0,05 bis 2 Grammäquivalente Säure je Liter enthält.

6. Verfahren nach dem Anspruch 1, dadurch gekennzeichnet, daß das Fällungsmittel in Mengen im Bereich von 2 bis 5000 Molen je Mol von in der sauren Lösung enthaltenem Molybdän verwendet wird.

**Claims**

1. A process for separation by precipitation of the molybdenum contained in acid uraniferous solutions by means of an agent belonging to the family of hydroxamic acids which are soluble in a solvent which is miscible with the acid solution characterised in that said agent is selected from the group formed by N-benzoylphenylhydroxylamine, decanehydroxamic acid and dodecanehydroxamic acid.

2. A process according to claim 1 characterised in that the precipitate is recovered by flotation.

3. A process according to claim 1 characterised in that the precipitate is recovered by an operation belonging to the group formed by settlement, centrifuging, filtration and combinations thereof.

4. A process according to claim 1 characterised in that the acid solutions contain one at least of the acids from the group formed by nitric acid, sulphuric acid, hydrochloric acid and mixtures thereof.

5. A process according to claim 1 characterised in that the uraniferous solution contains from 0.05 to 2 gram valencies of acid per litre.

6. A process according to claim 1 characterised in that the precipitation agent is used in amounts of from 2 to 5000 moles per mole of molybdenum contained in the acid solution.

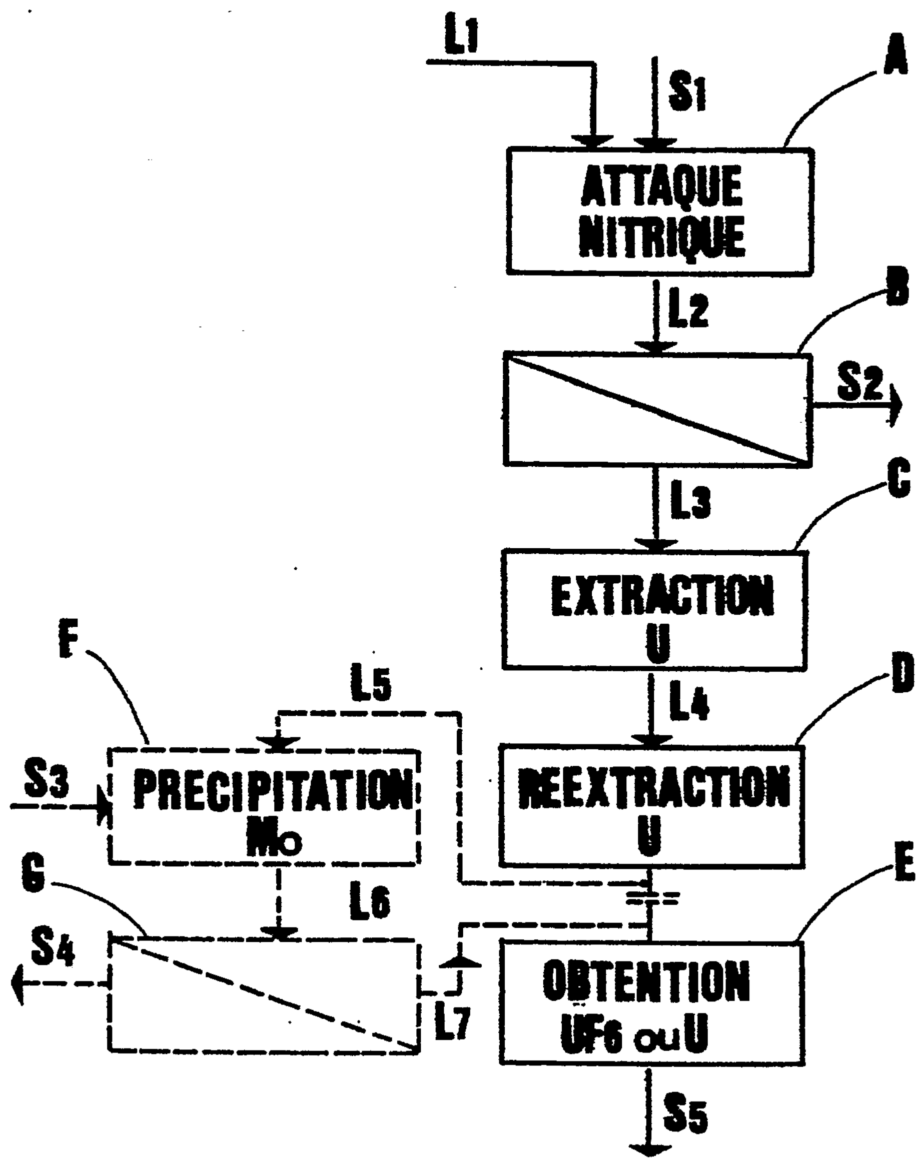
L1
S1
A
ATTAQUE NITRIQUE
L2
B
S2
L3
C
EXTRACTION U
F
L5
L4
D
S3
PRECIPITATION Mo
REEXTRACTION U
G
L6
E
S4
OBTENTION UF6 ou U
L7
S5

FIG.1